# EUROPEAN PATENT APPLICATION

(11) **EP 2 009 328 A1**
(43) Date of publication of application: **31.12.2008**
(21) Application number: 08104569.2
(22) Date of filing: 27.06.2008
(51) Int. Cl.: F16H 59/10, F16H 61/12

(54) **A speed change operation apparatus for a vehicle**

(30) Priority: 28.06.2007 JP 2007170039
(71) Applicant: Kabushiki Kaisha Atsumitec, Yuto-cho Nishi-ku Hamamatsu-shi Shizuoka 431-0192 (JP)
(72) Inventor: Ohno, Tetsuji, Hamamatsu-shi, Shizuoka-ken (JP); Suzuki, Yoshiyuki, Shizuoka-ken (JP); Muraki, Shuji, Hamamatsu-shi, Shizuoka-ken (JP)
(74) Representative: Cohausz & Florack

(57) **Abstract**

A speed change operation apparatus for a vehicle for performing speed change operation of a transmission of a vehicle by a pivotal operation of an operating-lever shaft comprising a body (1) of the speed change operation apparatus adapted to be mounted on a vehicle, and an operating-lever shaft (2) pivotally supported on the body (2) of the speed change operation apparatus, characterized in that the speed change operation apparatus further comprises a metal core member (6,11) rotated by pivotal operation of the operating-lever shaft (2), and coils (7a,7b.12a,12b) which are arranged along a pivotal trajectory of the core member (6,11) and to which a voltage is applied, and that shift positions of the operating-lever shaft can be detected by variations of voltage caused by movement of the core member (6,11) in the coils (7a,7b,12a,12b).

## Description

### BACKGROUND OF THE INVENTION

### Field of the Invention

The present invention relates to a speed change operation apparatus for a vehicle for performing speed change operation of a transmission of a vehicle.

### Description of Background Art

The speed change operation apparatus for a vehicle has in general an operating-lever shaft pivotally supported on a body of the speed change operation apparatus and a knob mounted on the tip end of the operating-lever shaft and the speed change of a transmission of a vehicle can be performed by pivotally operating the lever shaft with gripping the operating knob.

In general shift positions of the operating-lever shaft are detected by operating the lever shaft and to complete an electric circuit between movable contact arranged on a portion of the lever shaft and immovable contacts arranged on the body of the speed change operation apparatus. That is, it is possible to detect the shift position of the operating-lever shaft by completing the electric circuit with contacting the movable contact on the lever shaft with one of the plurality of immovable contacts corresponding to one of the shift positions. There is no known document of the prior art with reference to such a speed change operation apparatus.

### SUMMARY OF THE INVENTION

### Disclosure of the Invention

### Problems to be solved by the Invention

However there is problems in the speed change operation apparatus of the prior art that the number of parts is increased and the workability in its assembly since it is required to arrange immovable contacts as many as numbers corresponding to numbers of the predetermined shift positions. In addition there is a problem that a dedicated manufacturing facility is required in accordance with different types of vehicles having different arrangement of the immovable contacts since the shift position (i.e. pivotal angle) of the operating-lever shaft is usually different in different types of vehicles.

It is, therefore, an object of the present invention to provide a speed change operation apparatus which can detect the shift position of the operating-lever shaft with high accuracy and can be manufactured at a low cost.

### Means for solving the problems

For achieving the object of the present invention, there is provided according the present invention of claim 1, a speed change operation apparatus for a vehicle for performing speed change operation of a transmission of a vehicle by a pivotal operation of an operating-lever shaft comprising a body of the speed change operation apparatus adapted to be mounted on a vehicle, and an operating-lever shaft pivotally supported on the body of the speed change operation apparatus, characterized in that the speed change operation apparatus further comprises a metal core member rotated by pivotal operation of the operating-lever shaft, and coils which are arranged along a pivotal trajectory of the core member and to which a voltage is applied, and that shift positions of the operating-lever shaft can be detected by variations of voltage caused by movement of the core member in the coils.

It is preferable as defined in claim 2 that the core member has a plurality of extensions extending therefrom to different directions and the coils re arranged corresponding to the extensions, and that a plurality of detected signals corresponding to the shift positions of the operating-lever shaft can be generated on the basis of the voltage variations of the coils.

It is preferable as defined in claim 3 that the detected signals include at least a failsafe signal.

### Effects of the Invention

According to the present invention of claim1 since shift positions of the operating-lever shaft can be detected by variations of voltage caused by movement of the core member in the coils, it is possible to detect the shift position of the operating-lever shaft with high accuracy and to manufacture the speed change operation apparatus at a low cost.

According to the present invention of claim 2 since that the core member has a plurality of extensions extending therefrom to different directions and the coils rearranged corresponding to the extensions, and that a plurality of detected signals corresponding to the shift positions of the operating-lever shaft can be generated on the basis of the voltage variations of the coils, it is possible to generate two or more kinds of detected signals based on the shift positions of the operating-lever shaft.

According to the present invention of claim 3, since the detected signals include at least a failsafe signal, it is possible to detect the shift positions of the operating-lever shaft more accurately and firmly.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a side elevation view showing one embodiment of the speed change operation apparatus for a vehicle of the present invention;
Fig. 2 is a front elevation view showing the speed change operation apparatus for a vehicle of Fig. 1;
Fig. 3 is a schematic view showing a shift position detecting means of the speed change operation apparatus for a vehicle of Fig. 1;
Fig. 4 is a cross-sectional view taken along a line IV-IV of Fig. 3;
Fig. 5 is a schematic view showing a substrate used in the speed change operation apparatus for a vehicle of Fig. 1; and
Fig. 6 is a schematic view showing a shift position detecting means of another embodiment of the speed change operation apparatus for a vehicle of the present invention;
Fig. 7 is a cross-sectional view taken along a line VII-VII of Fig. 6; and
Fig. 8 is a graph showing a relation between the pivotal angle of the operating-lever shaft and the generated voltage in coils.

### DESCRIPTION OF THE PREFERRED EMBODIMENTS

### Best mode for carrying out the Invention

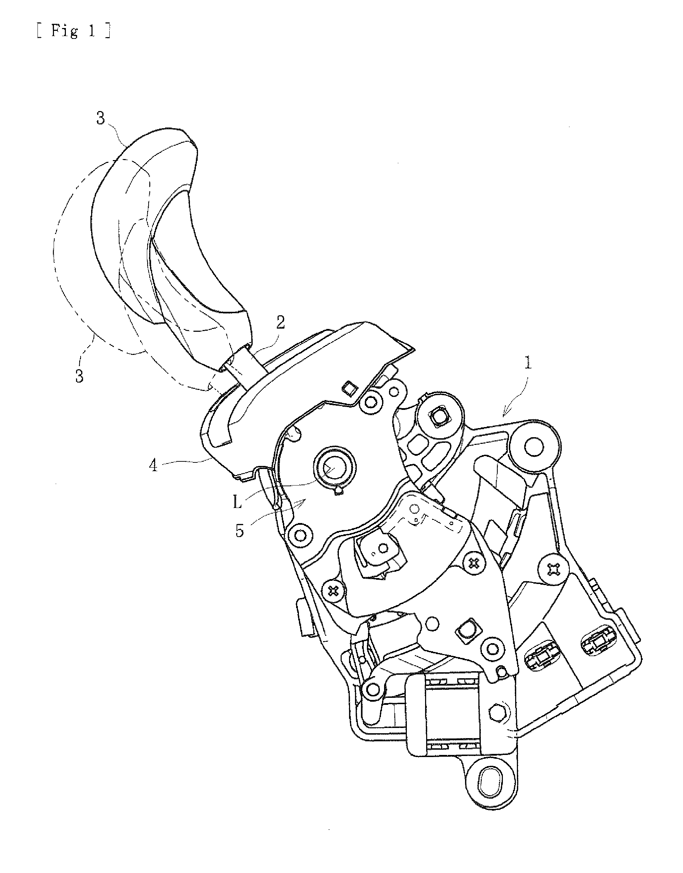

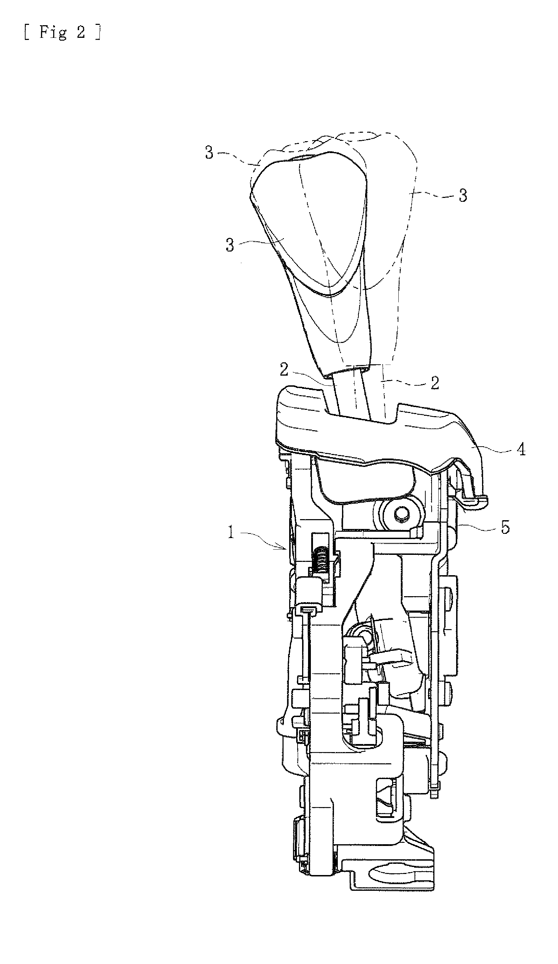

Preferable embodiments of the present invention will be hereinafter described with reference to the drawings. The speed change operation apparatus for a vehicle of one embodiment of the present invention is used for performing speed change operation of a transmission of a vehicle and comprises, as shown in Figs. 1 and 2, a body 1 of the speed change operation apparatus adapted to be mounted on a vehicle, a operating-lever shaft 2 pivotally mounted and movable along a gate slot (not shown) formed in the top of the body 1 of the apparatus, an operating knob 3 mounted on the tip end of the operating-lever shaft 2, and a shift position detecting means 5.

The body 1 of the speed change operation apparatus is adapted to be mounted on a body of vehicle and pivotally support the operating-lever shaft 2 and has on its top a decoration panel 4. The decoration panel 4 is formed with the gate slot (not shown) through which the operating-lever shaft 2 is passed. The operating-lever shaft 2 is a type which can move not only in fore and aft directions but in left and right directions, however other type which can move only in fore and aft directions may be used.

The operating-lever shaft 2 can pivot around its pivotal shaft "L" between shift positions e.g. "P" position (Parking position), "R" position (Reverse position), "N" position (Neutral position), "D" position (Drive position) and "L" position (Low position) to perform speed changing operation of the transmission of vehicle. That is, the operating-lever shaft 2 is so structured that it is pivoted between a plurality of shift positions (five positions in the illustrated embodiment) to perform speed changing operation of the transmission of vehicle with a shift position detecting means 5 detecting the shift position of the operating-lever shaft 2.

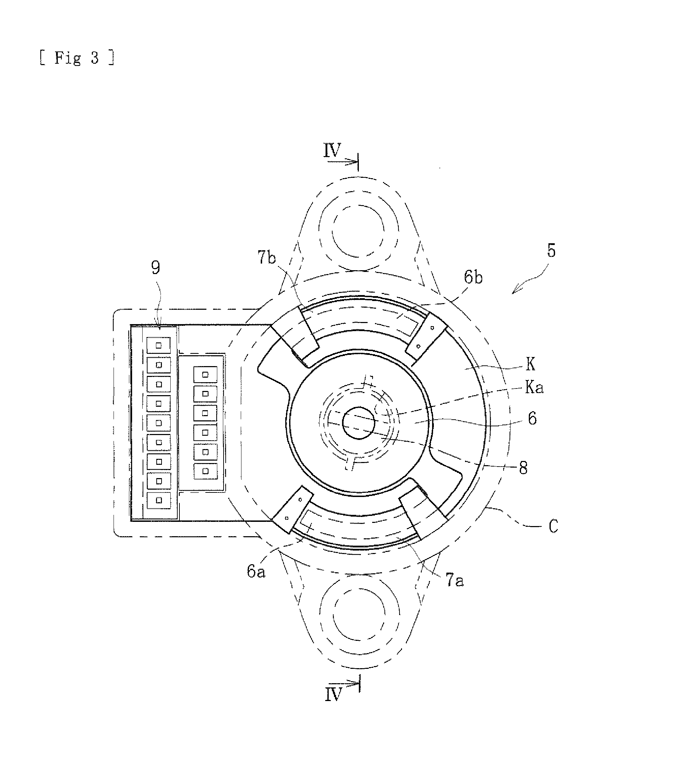

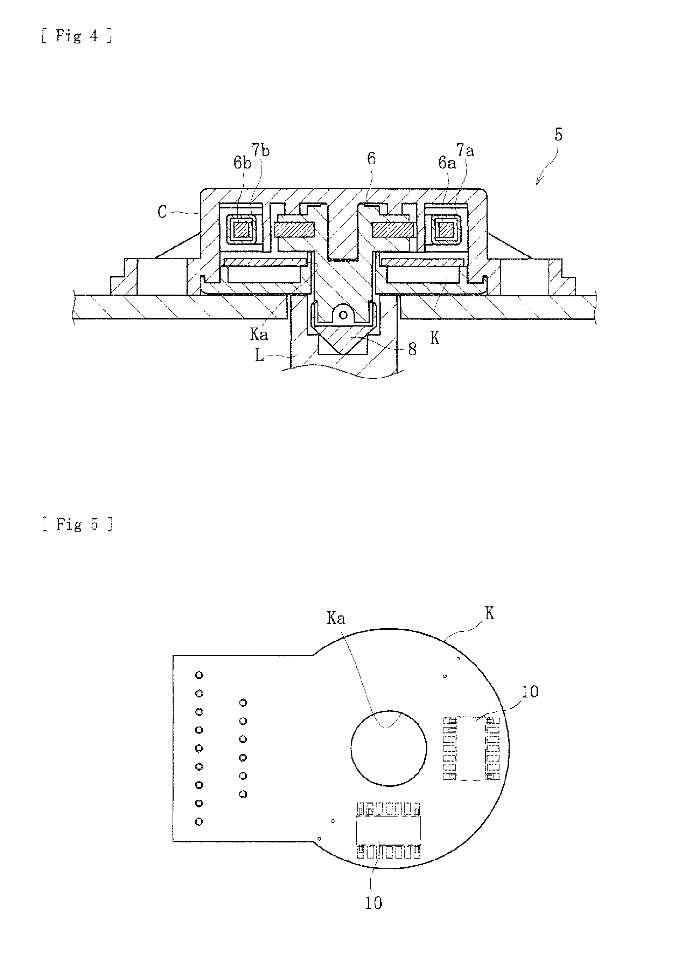

As shown in Figs. 3~5 the shift position detecting means 5 mainly comprises a core member 6 of metal contained in a plastic case "C", coils 7a, 7b, a substrate "K", and an IC chip 10 mounted on the substrate "K". The substrate "K" is formed with a through aperture Ka substantially at its center and a connector 9 for transmitting detected signals to a receiver at a transmission side and secured in the case "C".

The core member 6 is passed through the aperture Ka of the substrate and connected to the pivotal shaft "L" of the operating-lever shaft 2 via a connecting member 8 and has first and second extensions 6a, 6b each having a circular arc configuration. When the metal core member 6 is rotated by the pivotal movement of the operating-lever shaft 2 around the pivotal shaft "L", the first and second extensions 6a, 6b of the core member 6 are also rotated in a same direction and a same distance as those of the core member 6. Although the core member may be wholly formed of metal, only at least the first and second extensions 6a, 6b may be formed of metal.

The coils 7a, 7b are adapted to be applied by a voltage and arranged so that they extend along a pivotal trajectory of the core member 6 (more particularly the extensions 6a, 6b of the core member 6). It is preferable to provide a plurality of coils and the number (two in the illustrated embodiment) of coils corresponds to that of the extensions (i.e. the extensions 6a, 6b in the illustrated embodiment). That is, the first and second extensions 6a, 6b can be moved within the coils 7a, 7b when the core member 6 is rotated by the operating-lever shaft 5.

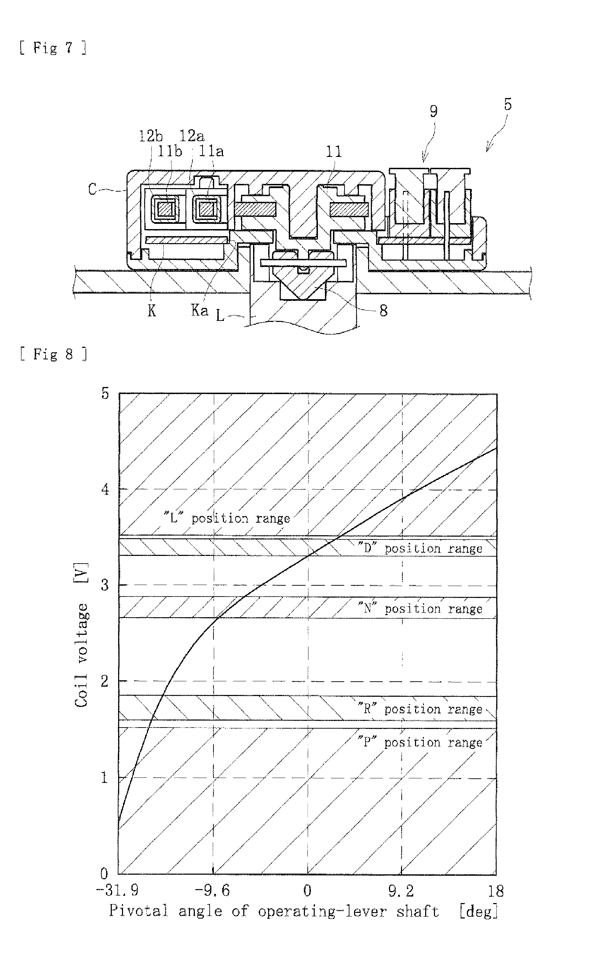

The voltage generated in coils 7a, 7b is varied in accordance with an amount of displacement of the first and second extensions 6a, 6b as shown in Fig. 8 when they move within the coils 7a, 7b. The variation of voltage is detected by the IC chip 10 mounted on the substrate "K" and thus it is possible to detect the shift position of the operating-lever shaft 2 on the basis of the variation of voltage. More particularly the voltage generated in coils 7a, 7b at each shift position of the operating-lever shaft 2 is previously determined and stored in the IC chip 10 and thus the shift position of the operating-lever. Shaft 2 can be detected by comparing the voltage generated in the coils 7a, 7b with the voltage data stored in the IC chip 10.

Since the voltage variation caused in the coil 7a by movement of the first extension 6a of the core member 6 is same as that caused in the coil 7b by movement of the second extension 6b of the core member 6, the failsafe of the sensors can be achieved. This enables to detect the shift position of the operating-lever shaft 2 more accurately and more firmly and thus to improve safety of driving of a vehicle. Although the failsafe is achieved by so setting that the voltage variation in the coil 7a and that in the coil 7b are same each other, it may be possible to achieve same object by setting the voltage variations in the coils 7a, 7b in reverse directions (i.e. a voltage in one coil is increase and a voltage in the other coil is decreased in accordance with the pivotal movement of the operating-lever shaft). In this case it is judged that the indication of the shift position of the operating-lever shaft is normal if the sum of the voltages equals to the set value.

According to the illustrated embodiment since the shift position of the operating-lever shaft 2 can be detected on the basis of the voltage variation caused by movement of the first and second extensions 6a, 6b of the core member 6 in the coils 7a, 7b, the shift position of the operating-lever shaft 2 can be detected accurately and by a low cost means. That is, according to the preferred embodiment of the present invention, since the shift position of the operating-lever shaft 2 can be detected continuously, it is unnecessary to provide sensors at every shift positions and thus it is possible to reduce the number of parts and manufacturing cost of the speed change operation apparatus and to improve its workability in assembly.

The present invention can be applied to any types of speed change operation apparatus only by changing memories in the IC chip 10 and thus shared between different types of vehicles. That is, the shift position of the operating-lever shaft can be detected easily and accurately even in various types of vehicles in which the operating position and the pivotal angle of the lever shaft are different.

In addition according to the present invention the shift position of the operating-shaft lever 2 can be detected by a non-contact manner. This enables to extend the service life of sensors and to achieve the detection of high accuracy as compared with the detecting structure using electrical contacts of the prior art. In addition according to the present invention since the core member 6 has a plurality of extensions (first and second extensions 6a, 6b in the illustrated embodiment) and a plurality of coils (coils 7a, 7b in the illustrated embodiment) are arranged corresponding to the extensions, it is possible to obtain a plurality of detected signals corresponding to the shift positions of the operating-lever shaft 2 on the basis of the voltage variation of the coils and thus to generate two or more kinds of detected signals based on the shift positions of the operating-lever shaft 2.

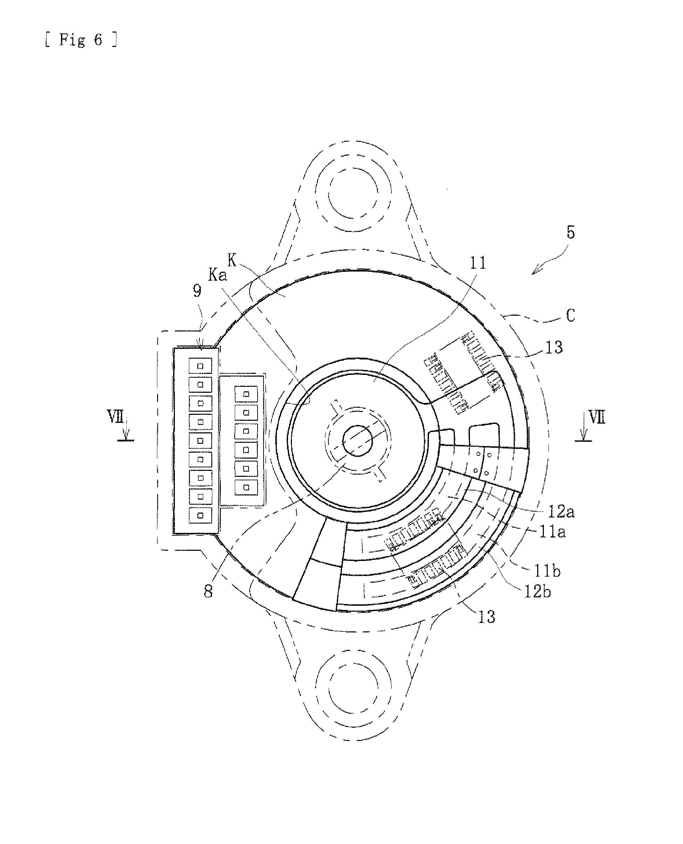

Figs. 6 and 7 show another embodiment of the present invention which is different in arrangement of the core member and the coils from those of the previously described and illustrated embodiment. The core member 11 of this embodiment has an inner first extension 11a and an outer second extension 11b each having a circular arc configuration. Coils 12a, 12b are arranged along a pivotal trajectory respectively of the first and second extensions 11a, 11b. At least the first and second extensions 11a, 11b of the core member 11 are made of metal similarly to those of the previous embodiment.

Similarly to the previous embodiment, a voltage generated in coils 12a, 12b varies when the core member 11 is rotated by the pivotal movement of the operating-lever shaft 2. This voltage variation is detected by the IC chip 13 mounted on the substrate and the shift position of the operation-lever shaft 2 can be detected based on the voltage variation. It is possible to use a plurality of IC chips 13 on the basis of the number of the extensions of the core member 11 and coils. This is also applied to the number of the IC chip 10 of the previous embodiment.

The provision of plurality of IC chips 13 enables on one hand to transmit detected signals generated by voltage variation e.g. of the coil 12a to a transmission side of a vehicle and the other hand to transmit detected signals generated by voltage variation e.g. of the coil 12b to a indicator in an instrument panel of a vehicle. That is, since a plurality of detected signals are generated corresponding to the shift positions of the operating-lever shaft 2 on the basis of the voltage variations of each coil 12a, 12b, it is possible to generate two or more kinds of detected signals based on the shift positions of the operating-lever shaft 2.

The present invention has been described with reference to the preferred embodiments. Obviously, modifications and alternations will occur to those of ordinary skill in the art upon reading and understanding the preceding detailed description. For example, only one extension may be provided on the core member and one coil corresponding to the extension may be provided along a pivotal trajectory of the extension. On the contrary three or more extensions may be formed on the core member and corresponding numbers of coils may be arranged. That is, it is possible to arrange coils corresponding to the number of the extensions of the core and to generate a plurality of detected signals corresponding to the number of the shift position of the operating-lever shaft based on voltage variations of each coil.

In addition although it is shown in the preferred embodiments of the present invention that the core members 6, 11 are mounted on the pivotal shaft "L" of the operating-lever shaft 2, the core members may be arranged in any part which is rotated interlocking with a pivotal movement of the operating-lever shaft 2. Furthermore the configuration of each extension is not limited to a circular arc and any configuration may be adopted if it can move in a coil in accordance with the pivotal movement of the operating-lever shaft.

### Applicability in Industries

The speed change operation apparatus for a vehicle of the present invention can be applied to any speed change operation apparatus having a different outline configuration or additional functions if it is a speed change operation apparatus characterized in that the speed change operation apparatus further comprises a metal core member rotated by pivotal operation of the operating-lever shaft, and coils arranged along a pivotal trajectory of the core member; and that shift positions of the operating-lever shaft can be detected by variations of voltage caused by movement of the core member in the coils.

## Claims

1. A speed change operation apparatus for a vehicle for performing speed change operation of a transmission of a vehicle by a pivotal operation of an operating-lever shaft comprising:
a body (1) of the speed change operation apparatus adapted to be mounted on a vehicle; and
an operating-lever shaft (2) pivotally supported on the body (1) of the speed change operation apparatus,
**characterized in:**
**that** the speed change operation apparatus further comprises a metal core member (6 or 11) rotated by pivotal operation of the operating-lever shaft (2), and
coils (7a, 7b or 12a, 12b) which are arranged along a pivotal trajectory of the core member (6 or 11) and to which a voltage is applied; and
**that** shift positions of the operating-lever shaft (2) can be detected by variations of voltage caused by movement of the core member (6 or 11) in the coils (7a, 7b or 12a, 12b).

2. A speed change operation apparatus of claim 1 wherein the core member has a plurality of extensions (6a, 6b or 11a, 11b) extending therefrom to different directions and the coils (7a, 7b or 12a, 12b) are arranged corresponding to the extensions (6a, 6b or 11a, 11b), and wherein a plurality of detected signals corresponding to the shift positions of the operating-lever shaft (2) can be generated on the basis of the voltage variations of the coils (7a, 7b or 12a, 12b).

3. A speed change operation apparatus of claim 2 wherein the detected signals include at least a failsafe signal.
